# EUROPEAN PATENT APPLICATION

(11) **EP 0 995 573 A1**
(43) Date of publication of application: **26.04.2000**
(21) Application number: 99112698.8
(22) Date of filing: 02.07.1999
(51) Int. Cl.: B29C 45/27

(54) **Injector/mould system for the injection of polymers, silicons or thermosetting material**

(30) Priority: 21.10.1998 IT MI980686 U
(71) Applicant: Meroni, Bruno, 20154 Milano (IT)
(72) Inventor: Meroni, Bruno, 20154 Milano (IT)
(74) Representative: La Ciura, Salvatore

(57) **Abstract**

Injector/mould system for the injection of polymers, silicons and thermosetting material including:
- a mould consisting of one first plate (3) or front provided with a mould hollow;
- a second plate (4) in contact with the former, provided with heating devices;
- an insulating plate (5);
- a third plate (6), or rear plate, cooling plate;
- one or more feeding plates (30) of the material and
- one injection nozzle inserted into a seat located in the above mentioned plates in which the first plate (3) is openable in order to allow the access to the above mentioned seat, being the distance between the said first plate and the bottom of the seat not larger than the length of the injection nozzle.

## Description

This invention proposes an injector/mould system for the injection of silicons, polymers or thermosetting material consisting of a first plate provided with the mould hollow, a second heating plate in contact with the former, a layer of insulating material, a third cooling plate and one or more plates for the feeding of the material, as well as an injector fitted in a hollow located in the above mentioned plates in which the nozzle is fitted into its seat by inserting it from the heating plate side and is then blocked in position by the mould plate, which shall lock the nozzle against the bottom feeding plate when the mould is closed.

This embodiment allows an easy removal of the nozzle in case of servicing and/or repairing operations, by simply opening the mould, even if in the press or at high temperature, without the need to completely disassemble the mould itself.

According to the invention, the nozzle consists of a few parts which may be easily assembled by fitting them one on top of the other without the need of threadings, weldings or other operations since the whole system is kept together, in operative position, by the mould plates themselves composing the mould.

An injection system is therefore obtained consisting of a few parts, easy to be manufactured and requiring few and easy assembly operations and in case a servicing.

A well-known method for the production of silicon, polymer or thermosetting material pieces consists of injecting the cold material into a heated mould where the temperature causes the polymerisation of the material which hardens.

This kind of mould is described for example in the European patent application no. 0841142 consisting of a first plate, constituting the proper mould, including the hollow where the material is injected, a second heating plate in contact with the former one, a layer of insulating material and a third plate where a coolant flows.

These plates are tightly joined and provided with a hole representing the seat of an injection nozzle through which the material is fed.

A coolant flows inside the cooling plate through a duct located around the nozzle in order to avoid that the heat of the mould may be transmitted to the nozzle and causes a premature hardening of the material.

This known mould is provided with a nozzle inserted from the outside, i.e. from the cooling plate side, where it is then blocked in a well-known method.

A solution similar to the above mentioned is also described in the Austrian patent no. 481253.

However both are extremely complex.

In fact, in case of servicing or cleaning procedures, in order to withdraw the nozzle, it is necessary that the entire mould be disassembled with considerable practical difficulties and long-lasting shutdowns of the machine.

The same nozzles of the known art are then worked either in a single piece, with consequent manufacturing difficulties, or they consist of more threaded parts which are later assembled with the consequent difficulty to render more difficult the cleaning and servicing operations and in case of drawbacks they oblige to replace the entire nozzle.

In order to avoid these drawbacks, this invention proposes now an injector system with a nozzle consisting of different pieces easily fitted one on top of the other and inserted into the seat of the mould from inside, i.e. inserting them from the heating plate side.

When the mould is closed, these parts are blocked in position by the mould plate that moves the nozzle push rod and presses it against the bottom of its seat.

This method allows easier and faster servicing procedures since they just require the opening of the mould and the removal of the nozzle without the need of dismantling the different plates and the nozzle itself may be easily dismantled for an easier cleaning and servicing of the different parts.

This invention will be now described in detail by way of a non limitative example with reference to the enclosed figures wherein:
- Fig. 1 shows the section of an injector/mould system according to the invention, along a plane passing through the nozzle axis.
- Fig. 2 is a section of the nozzle along a plane orthogonal to the axis.

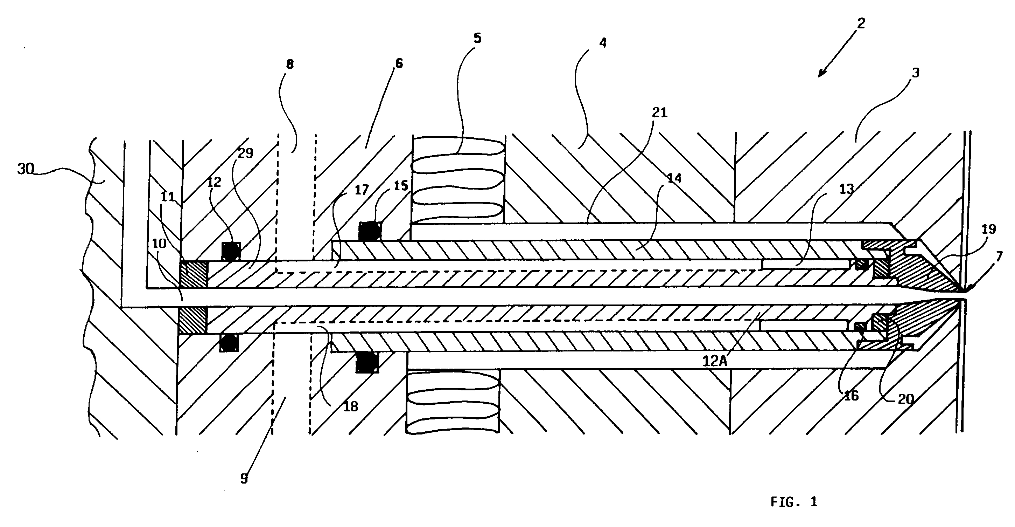

With reference to Fig. 1, 1 indicates an injector according to the invention, fitted in a mould 2 consisting of a first plate or inner plate 3 provided with a chamber where the injection takes place, a heating plate 4 in contact with the former, a layer of insulating material 5 and a fourth plate or outside cooling plate 6.

Beside the above mentioned plates the system is provided with one or more feeding plates 30 including ducts for the feeding of the material or a common duct ruling the ducts directed towards the different injectors.

The nozzle is fitted in a seat inside these plates as shown in the following pages.

Inside plate 3, on the top of the nozzle, is fitted the injection hole 7 through which the material is injected in the mould impression.

The nozzle can be also a passing nozzle and may inject the material directly in the impression. In this case the nozzle top is provided with a suitable relief as checking of the effort of the mould plate.

Plate 4 is provided with heating elements, not shown in the figures, such as electric resistance or similar; plate 6 is complete with a feeding duct 8 and an outlet duct 9 of a coolant circulating around the nozzle in order to avoid that the heat of the mould may reach the injection duct and cause the premature hardening of the material.

The plates of the mould are kept tightly joined and locked together with a well-known method, with the inner plate 3 provided with the mould hollow, either openable or removable in order to allow the servicing operations and an easy replacement of the nozzle.

The plates of the mould are provided with a hole which represents the seat of the nozzle.

The nozzle consists of a central body 29 crossed by an axial duct 10 representing the feeding duct of the material to be moulded.

The rear extremity of the body 29 is inserted into a hole in the plate 6 and leans against a gasket 11.

A second annular gasket 12 ensures the tightness in correspondence with the rear extremity of the body 29.

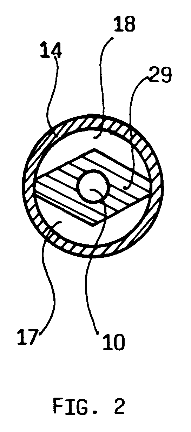

Most of body 29 length has a prismatic section, as shown in Fig. 2, with the exception of the tang area where the body 29 presents a cylindrical section which fills its entire seat.

From the front side, shown as 12A, the body 29 presents the same cylindrical section but with a smaller diameter, so as to create an annular chamber 13. Around the body 29 is inserted a cylindrical jacket 14 with an outside annular gasket 15 acting as seal in correspondence with the rear side.

A second annular gasket 16 acts as a seal between the body 29 and the front side of the jacket 14.

The central part of the body 29, as described above, presents a polygonal section (precisely rhomboidal section) with two opposite edges in connection with the inside wall of the jacket 14.

In this manner the jacket 14 is provided with two inner ports indicated with 17 and 18 that, in correspondence with the nozzle bottom, are in direct communication respectively with the feeding duct 8 and the delivery duct 9 of the coolant, and in the rear side they are in communication with the annular chamber 13.

In this manner there is a port for the coolant coming from duct 8, which flows down along the port 17, passes through the annular chamber 13 and from this point reascends the port 18 and then is discharged through the delivery duct 9. The jacket 14 is provided with a push rod 19 with the interposition of a head gasket 20.

The push rod 19 presents a hole having the same axis of rotation of the duct 10 and, once the system is assembled, it is located in correspondence with hole 7 in communication with the injection chamber.

The jacket 14 and the push rod 19 are inserted into a chamber 21 of the mould plates having a diameter larger than the chamber 14, in such a way as to leave a suitable space and avoid the propagation of heat from the mould to the nozzle.

During the operation of the system, the material is fed through the duct 10 and it is discharged through the hole in the push rod 19 and then flows to the pressing chamber through the port 7 which may present several shapes, among which one allowing to use a nozzle with the passing push rod.

Here the material polymerises and hardens by means of the heat transmitted from the heating plate 4 to the mould plate 3.

At the same time, all around the nozzle body 29, the coolant ia caused to circulate avoiding the premature heating of the material.

In case of need of cleaning or servicing, it is enough opening the mould, separating the plate 3 of the system from the others and replacing the nozzle that can be easily withdrawn from its seat. The same nozzle can be disassembled in its parts by removing them one from the other and therefore accurately cleaning them.

To reassemble the device, the body 29 is inserted in its seat, with the jacket 14 and the push rod 19, afterwards it is enough closing the mould with the plate 3 in contact with plate 4, and the plate 3 pressing the nozzle against the bottom wall, locking it and keeping the different parts tightly assembled.

A skilled in this art may make changes and different versions which must be considered included within the competence of this invention.

## Claims

1. Injector/mould system for the injection of polymers, silicons and thermosetting material including:
• a mould consisting of one first plate or front plate provided with a mould hollow;
• a second plate in contact with the former, provided with heating devices;
• an insulating plate;
• a third plate, or rear plate, cooling plate;
• one or more feeding plates of the material and
• an injection nozzle inserted into a seat located in the above mentioned plates characterized in that it provides means suitable to allow the access to the said seat from the front side of the said mould.

2. Injector/mould system for the injection of polymers, silicons and thermosetting material, including:
• a mould consisting of one first plate or front plate provided with a mould hollow;
• a second plate in contact with the former, provided with heating devices;
• an insulating plate;
• one or more feeding plates of the material and
• a third plate, or rear plate, cooling plate and
• an injection nozzle inserted into a seat located in the above mentioned plates characterized in that this first plate is openable in order to allow the access to the said seat, since the distance between the said first plate and the bottom of the seat is not larger than the length of the injection nozzle.

3. Injector/mould system according to the previous claims, characterized in that above mentioned nozzle consists of parts fitted one on top of the others and kept tightly locked together by the said front plate of the mould which axially pushes the said nozzle against the bottom of its seat.

4. Injector/mould system according to claim 3 characterized in that the above mentioned nozzle consists of:
• a body with an injection duct for the material to be injected and
• an outside jacket fitted on the said body, characterized by the fact that the said body presents a polygonal section, at least along part of the length of the said jacket, with at least two edges in contact with the inner surface of the jacket itself, in such a way as to create two separate ducts running along the said body; since the said duct presents, near one extremity of the said jacket, a section whose maximum dimension is smaller than the inside diameter of the said jacket in such a way as to create a substantially annular chamber which creates a connection between the said ports, being these ports in communication with feeding and discharge devices of a coolant.

5. Injector/mould system according to the previous claims, characterized in that the above mentioned injector consists of more parts fitted one on top of the other, being the said parts kept assembled, when the system is fitted, by the pressure exerted by the mould against an extremity of the said injector.

6. Injector/mould system according to the previous claims, characterized in that it provides a feeding plate with a common feeding duct ruling the ducts directed to the different injectors.
